# EUROPÄISCHE PATENTSCHRIFT

(11) **EP 2 755 860 B1**
(45) Veröffentlichungstag und Bekanntmachung des Hinweises auf die Patenterteilung: **05.04.2017**
(21) Anmeldenummer: 12735888.5
(22) Anmeldetag: 18.07.2012
(51) Int. Cl.: B60Q 1/52, G06T 11/00, G06T 15/20, B60R 11/02, B60R 21/00, G05D 1/02, B60Q 9/00, G06F 3/0481, B62D 15/02, G06F 3/0484, G08G 1/16

(54) **VERFAHREN ZUR UNTERSTÜTZUNG EINES FAHRERS EINES KRAFTFAHRZEUGS**
METHOD FOR ASSISTING A DRIVER OF A MOTOR VEHICLE
PROCÉDÉ D'ASSISTANCE AU CONDUCTEUR D'UN VÉHICULE AUTOMOBILE

(30) Priorität: 12.09.2011 DE 102011082483
(43) Veröffentlichungstag der Anmeldung: 23.07.2014
(73) Patentinhaber: Robert Bosch GmbH, 70442 Stuttgart (DE)
(72) Erfinder: SANS SANGORRIN, Jorge, 70469 Stuttgart (DE); MIELENZ, Holger, 73760 Ostfildern (DE)
(86) Internationale Anmeldenummer: PCT/EP2012/064064
(87) Internationale Veröffentlichungsnummer: WO 2013/037539

(56) Entgegenhaltungen:
- EP-A2- 1 482 280
- WO-A1-2009/147477
- JP-A- 10 086 698
- JP-A- 2004 306 779
- JP-A- 2009 096 347
- US-A1- 2007 003 162
- US-A1- 2011 157 184

## Beschreibung

### Stand der Technik

Die Erfindung betrifft ein Verfahren zur Unterstützung eines Fahrers eines Kraftfahrzeugs bei einem Fahrmanöver.

Um dem Fahrer eines Kraftfahrzeugs Unterstützung beim Manövrieren seines Kraftfahrzeugs zu bieten, sind unterschiedliche Fahrassistenzsysteme am Markt erhältlich. Insbesondere wird der Fahrer mithilfe geeigneter Fahrassistenzsysteme zum Beispiel beim Einparken oder auch beim Manövrieren bei niedrigeren Geschwindigkeiten unterstützt. Hierzu wird zunächst die Umgebung des Kraftfahrzeugs mit geeigneten Sensoren erfasst, um dem Fahrer zum Beispiel den Abstand zu Objekten in der Umgebung des Kraftfahrzeugs anzuzeigen. Die Anzeige des Abstandes erfolgt zum Beispiel optisch oder akustisch, beispielsweise mithilfe eines akustischen Warntons, dessen Frequenz in Abhängigkeit eines kürzer werdenden Abstandes ansteigt, um über die Nähe zu einem Objekt in der Umgebung des Kraftfahrzeuges zu informieren. Alternativ ist auch eine optische Anzeige bekannt, wobei zum Beispiel die Anzahl von aufleuchtenden LEDs oder die Länge eines Balkens zunimmt, wenn sich das Kraftfahrzeug einem Objekt nähert. Bei Unterschreiten eines minimalen Abstandes wird zur Warnung des Fahrers zum Beispiel ein Dauerton gesendet oder ein rotes Licht gezeigt. Bei optischen Darstellungen ist des Weiteren auch bekannt, dem Fahrer zum Beispiel auf einer Anzeigevorrichtung, beispielsweise einem Bildschirm eines Navigationssystems oder auch einer separaten Anzeigevorrichtung das Kraftfahrzeug in Draufsicht darzustellen und den Abstand zu einem Objekt zum Beispiel durch Abstandslinien anzuzeigen.

Eine Vorrichtung, mit der Hindernisse erkannt und signalisiert werden können, ist zum Beispiel in DE 198 21 929 A1 beschrieben. Hierzu werden mit geeigneten Ultraschallsendern Signale gesendet, die an einem Hindernis reflektieren. Die reflektierten Ultraschallwellen werden empfangen und anhand der Zeit, die zwischen dem Senden des Signals und dem Empfangen des Echos verstreicht, wird der Abstand zu einem Hindernis bestimmt. Als Abstand zum Hindernis wird der Abstand angenommen, der von dem Sensor erfasst wird, der den kürzesten Abstand misst. Durch entsprechende Alarmeinrichtungen, beispielsweise durch einen Alarmton, wird dem Fahrer des Kraftfahrzeugs gezeigt, in welcher Entfernung sich das Objekt befindet und in welcher Richtung es liegt.

Bei den aus dem Stand der Technik bekannten Systemen ist es jeweils lediglich bekannt, dem Fahrer den Abstand zum nächstliegenden Objekt anzuzeigen. Keines der bekannten Systeme erlaubt es jedoch, dem Fahrer sich den kürzesten Abstand zu einem bestimmten Objekt im Umfeld des Kraftfahrzeuges gezielt anzeigen zu lassen oder den Fahrer zum Abstand zu einem bestimmten Objekt durch akustische oder haptische Hinweise zu informieren. Insbesondere ist es mit den bekannten Systemen nicht möglich, dass der Fahrer die Möglichkeit erhält, ein Objekt auszuwählen, dessen Entfernung angezeigt werden soll. Aus JP H10-086698 A ist eine Cruise-Control-Funktion bekannt, bei der ein Abstand und die Reisegeschwindigkeit eines Kraftfahrzeugs auf ein Referenzfahrzeug eingestellt wird, dem in einem sicheren Abstand gefolgt werden soll. Dabei kann der Fahrer auswählen, welchem vorausfahrenden Fahrzeug gefolgt werden sollZur Beurteilung der vorliegenden Verkehrssituation werden ausschließlich die Daten von beweglichen Objekten, nämlich Fahrzeugen, herangezogen. Ein typischer Einsatzzweck für das Verfahren nach JP H10-086698 A ist das Fahren auf einer mehrspurigen Straße, beispielsweise einer Autobahn.

Der nächstliegende Stand der Technik ist in der JP H10-086698 A zu sehen.

EP 1482280 A2 beschreibt ein Kollisionsvermeidungssystem, das zum Einsatz bei höheren Geschwindigkeit, beispielsweise bei der Fahrt auf einer Schnellstraße vorgesehen ist. Es werden Hindernisse erkannt die sich vor dem Fahrzeug befinden. Stationäre Hindernisse wie Tunnelwände werden als solche erkannt. Bei der Berechnung der verfügbaren Zeit zum Ausweichen werden neben Anstandsinformationen noch Informationen über die Straßenneigung verarbeitet.

### Offenbarung der Erfindung

### Vorteile der Erfindung

Das erfindungsgemäß vorgeschlagene Verfahren zur Unterstützung eines Fahrers eines Kraftfahrzeugs bei einem Fahrmanöver umfasst folgende Schritte:
(a) Erfassen von Daten der Umgebung des Kraftfahrzeugs, Auswerten der erfassten Daten zur Erfassung von Objekten und optische Darstellung der erfassten Objekte,
(b) Auswahl mindestens eines der erfassten Objekte durch den Fahrer des Kraftfahrzeugs,
(c) Bestimmung des geringsten Abstandes zwischen dem Kraftfahrzeug und dem mindestens einen ausgewählten Objekt,
(d) Ausgabe einer Information an den Fahrer des Kraftfahrzeugs über den geringsten Abstand zwischen dem mindestens einen ausgewählten Objekt und dem Kraftfahrzeug.

Durch das erfindungsgemäße Verfahren, bei dem der Fahrer ein vom System erfasstes Objekt auswählt, dessen Abstand angezeigt wird, wird vermieden, dass der Fahrer nicht nachvollziehen kann, aus welchem Grund das System gerade warnt. Anders als bei den bekannten Fahrassistenzsystemen, bei denen nicht selektiv der kürzeste Abstand zu einem Objekt angezeigt wird, und der Fahrer daher teilweise nicht weiß, aus welchem Grund das System gerade warnt, dient die gezielte Auswahl eines Objekts durch den Fahrer und die Anzeige des Abstandes zu diesem Objekt dazu, dem Fahrer die gewünschte Unterstützung beim durchzuführenden Fahrmanöver zu geben.

So ist es zum Beispiel möglich, dass der Fahrer gezielt ein Objekt, beispielsweise eine Säule oder ein parkendes Kraftfahrzeug in einem Parkhaus, auswählt, die seinen Parkplatz, in den er gerade fahren möchte, flankiert. Dem Fahrer wird somit ein hohes Systemverständnis gegeben und er kann sich auf die übrigen Fahrhandlungen konzentrieren und die Informationen zum Abstand zu dem ausgewählten Objekt, beispielsweise der Säule oder dem anderen Kraftfahrzeug, zielsicher in seine Planung und Ausführung des Fahrmanövers einbinden.

Auch beim Anfahren zum Beispiel an einen Ticketautomaten beim Einfahren in ein Parkhaus kann der Fahrer gezielt den Automaten auswählen und dann das Kraftfahrzeug unter Berücksichtigung der Abstandsinformationen zu dem Automaten, die vom System gegeben werden, steuern.

Neben Säulen oder Kraftfahrzeugen beim Einparken oder Ticketautomaten sind weitere Hindernisse, die gezielt angezeigt werden können, beispielsweise Mauern, Wände, Hecken, Pflanzkübel oder Ähnliches.

Ein weiterer Vorteil des erfindungsgemäßen Verfahrens ist, dass beim Einparken oder Manövrieren des Kraftfahrzeuges auch in kniffligen Situationen keine zweite Person mehr benötigt wird, die dem Fahrer weitere Informationen zum Beispiel zum Abstand zu einem bestimmten Objekt gibt. Auch ist es nicht mehr notwendig, dass der Fahrer durch starkes Verdrehen des Kopfes die Umgebung um das Kraftfahrzeug erfassen muss. Dies ist insbesondere vorteilhaft für Fahrer, deren Bewegungsfähigkeit eingeschränkt ist.

Die Auswahl des mindestens einen der erfassten Objekte durch den Fahrer des Kraftfahrzeugs in Schritt (b) kann zum Beispiel dadurch erfolgen, dass der Fahrer des Kraftfahrzeugs das Objekt durch Markieren des Objektes in der optischen Darstellung auswählt. Hierdurch wird dem Fahrassistenzsystem, das zur Durchführung des Verfahrens eingesetzt wird, eine gezielte Information über das zu beobachtende Objekt gegeben.

Das Markieren des Objektes kann zum Beispiel durch Antippen auf einem Touchscreen erfolgen. Alternativ ist es auch möglich, dass beispielsweise ein Touchpad oder ein Trackball genutzt werden, mit dem der Fahrer einen Zeiger auf das zu markierende Objekt bewegt und das Objekt dann beispielsweise durch Antippen des Touchpads oder durch Drücken eines Tasters markiert. Weitere Möglichkeiten zum Markieren sind zum Beispiel zunächst das Auswählen des Objektes mit einem Multifunktionsschalter und anschließendes Markieren durch Betätigen des Multifunktionsschalters.

Die Objekte können dem Fahrer in einer Draufsicht oder dreidimensional dargestellt werden. Bei einer Darstellung in Draufsicht werden die Objekte jeweils an den entsprechenden Positionen - relativ zu der Kontur des Fahrzeugs des Fahrers - dargestellt, an denen diese vom Umfelderfassungssystem des Kraftfahrzeugs erfasst worden sind. Besonders bevorzugt ist eine dreidimensionale Darstellung, wobei die Darstellung in diesem Fall vorzugsweise dem Sichtfeld des Fahrers entspricht, so dass dieser auf einfache Weise aus der dreidimensionalen Darstellung das relevante Objekt erkennen und markieren kann.

Um eine übersichtliche Darstellung zu erhalten ist es weiterhin möglich, dass dem Fahrer die Option eingeräumt wird, ein ausgewähltes Objekt durch Betätigung eines Bedienelementes aus der Darstellung zu löschen. Durch das Löschen von Objekten kann der Fahrer gezielt die Objekte stehen lassen, deren Abstände ihn interessieren, um zum Beispiel bei hintereinander liegenden Objekten Verwechslungen zu vermeiden und genau das Objekt auszuwählen, das den Fahrer interessiert und nicht versehentlich ein davor- oder dahinterliegendes.

Weiterhin ist es vorteilhaft, wenn dem Fahrer die Möglichkeit eingeräumt wird, eine bereits getätigte Auswahl wieder rückgängig zu machen. Dies kann zum Beispiel dadurch erfolgen, dass der Fahrer ein bereits ausgewähltes Objekt ein zweites Mal markiert und auswählt.

Erfindungsgemäß werden alle Objekte, die einen aufgrund der aktuellen Fahrsituation prädizierten Fahrschlauch flankieren, in der Darstellung hervorgehoben. Das Hervorheben der Objekte, die den prädizierten Fahrschlauch flankieren, hat den Vorteil, dass die Aufmerksamkeit des Fahrers gerade auf die Objekte gelenkt wird, die für die Durchführung des geplanten Fahrmanövers interessant sind. Objekte, die weiter entfernt vom prädizierten Fahrschlauch sind und daher für das durchzuführende Fahrmanöver keine Gefahr darstellen, werden so aus dem Aufmerksamkeitsbereich des Fahrers genommen.

Der prädizierte Fahrschlauch wird zum Beispiel anhand von Fahrinformationen bestimmt. Hierbei wird zum Beispiel der aktuelle Lenkradeinschlag oder davon abgeleitet die Krümmung der aktuell gefahrenen Trajektorie und die Geschwindigkeit des Kraftfahrzeugs berücksichtigt. Anhand des Lenkradeinschlags und der Geschwindigkeit des Kraftfahrzeugs lässt sich erfassen, wie der weitere Weg des Kraftfahrzeugs voraussichtlich abläuft. Bei einer Betätigung des Lenkrads durch den Fahrer wird der prädizierte Fahrschlauch neu berechnet und es können in diesem Fall beispielsweise auch von den ursprünglichen Objekten verschiedene Objekte aufgrund einer Anpassung des prädizierten Fahrschlauches hervorgehoben werden. Vom Fahrer des Kraftfahrzeugs ausgewählte Objekte bleiben jedoch vorzugsweise so lange weiter ausgewählt, bis der Fahrer diese wieder abwählt.

Um insbesondere eine Kollision mit dem ausgewählten Objekt zu vermeiden ist es vorgesehen, dass ein Warnsignal ausgegeben wird, sobald der geringste Abstand zwischen dem Kraftfahrzeug und dem mindestens einen ausgewählten Objekt einen vorgegebenen Mindestabstand unterschreitet. Der Mindestabstand kann dabei vom Fahrassistenzsystem vorgegeben sein und in einer geeigneten Speichereinheit des Fahrassistenzsystems abgespeichert sein. Hierbei ist es auch möglich, unterschiedliche Mindestabstände zu einem Objekt in Abhängigkeit von der Position des Objektes zum Kraftfahrzeug vorzusehen. So ist es zum Beispiel möglich, einen geringeren Mindestabstand vorzusehen, wenn sich das Objekt seitlich neben dem Kraftfahrzeug befindet und einen größeren Mindestabstand, wenn das Objekt vor oder hinter dem Kraftfahrzeug ist. Der größere Mindestabstand bei einem Objekt vor oder hinter dem Kraftfahrzeug dient insbesondere dazu, dass das Kraftfahrzeug noch rechtzeitig vor einer Kollision mit dem Objekt abgebremst werden kann, wenn das Warnsignal ausgegeben wird.

Das Warnsignal kann dabei zum Beispiel ein optisches, akustisches und/oder haptisches Warnsignal sein. Als akustisches Warnsignal eignet sich insbesondere ein Warnton, als optisches Warnsignal beispielsweise ein Warnlicht. Als haptisches Warnsignal kann das Kraftfahrzeug zum Beispiel ruckhaft abgebremst werden oder es wird das Lenkrad in Vibration versetzt.

Eine geeignete Vorrichtung zur Durchführung des Verfahrens umfasst Mittel zur Erfassung der Umgebung sowie Mittel zur Auswertung von erfassten Daten zur Erfassung von Objekten und zur Darstellung der erfassten Objekte, Mittel zur Auswahl mindestens eines der dargestellten Objekte und Mittel zur Bestimmung des Abstandes zwischen dem mindestens einen ausgewählten Objekt und dem Kraftfahrzeug.

Als Mittel zur Erfassung der Umgebung werden insbesondere Abstandssensoren verwendet. Bei den Abstandssensoren kann es sich zum Beispiel um Ultraschallsensoren, Infrarotsensoren, Radarsensoren, Lidarsensoren oder weitere optische Sensoren, beispielsweise Videokameras, handeln. In Abhängigkeit von den eingesetzten Abstandssensoren wird der Abstand zu einem Objekt zum Beispiel durch Senden eines Signals und Empfang eines vom Objekt reflektierten Echos bestimmt oder alternativ insbesondere bei Verwendung von Videokameras durch ein geeignetes Bildverarbeitungsverfahren.

Um die von den Abstandssensoren erfassten Signale auszuwerten, um Objekte in der Umgebung des Kraftfahrzeugs zu erfassen und den Abstand zwischen einem ausgewählten Objekt und dem Kraftfahrzeug zu bestimmen, wird bevorzugt ein Steuergerät mit einem geeigneten Prozessor eingesetzt. Alternativ ist es auch möglich, eine separate Auswerteinheit vorzusehen, die beispielsweise auch an einem Sensor angeordnet sein kann.

Bevorzugt ist jedoch der Einsatz eines geeigneten Steuergerätes. Das Steuergerät kann weiterhin auch Speichermittel umfassen, in denen zum Beispiel ein geforderter Mindestabstand abgelegt werden kann.

Als Mittel zur Darstellung der erfassten Objekte können beispielsweise ein Monitor oder ein Head-up-Display verwendet werden. Besonders bevorzugt zur Darstellung der erfassten Objekte wird ein Touchscreen verwendet. Dieses kann dann auch zur Auswahl mindestens eines der dargestellten Objekte genutzt werden. Wenn die Darstellung auf einem Monitor oder in einem Head-up-Display erfolgt, ist es zum Beispiel möglich als Mittel zur Auswahl mindestens eines der dargestellten Objekte ein Touchpad, einen Trackball oder einen Multifunktionsschalter zu nutzen. Weiterhin können auch die Erkennung von Sprachkommandos oder eine natürlich sprachliche Sprachsteuerung oder eine Gestenerkennung sowie jede beliebige weitere Steuereinrichtung, beispielsweise Produkte der Consumer Electronic genutzt werden.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1.1: ein Verkehrsszenario durch die Windschutzscheibe eines Kraftfahrzeugs,
- Figur 1.2: eine dreidimensionale Darstellung erfasster Messdaten des in Figur 1.1 dargestellten Szenarios
- Figur 2: eine Zuordnung von Objekten des Szenarios zu den dreidimensional dargestellten Messdaten,
- Figur 3: Auswahl eines Elementes in der dreidimensionalen Darstellung der Messdaten
- Figur 4: eine Hervorhebung mehrerer Objekte, die an den prädizierten Fahrschlauch angrenzen, in der dreidimensionalen Darstellung der Messdaten.

### Ausführungsbeispiele der Erfindung

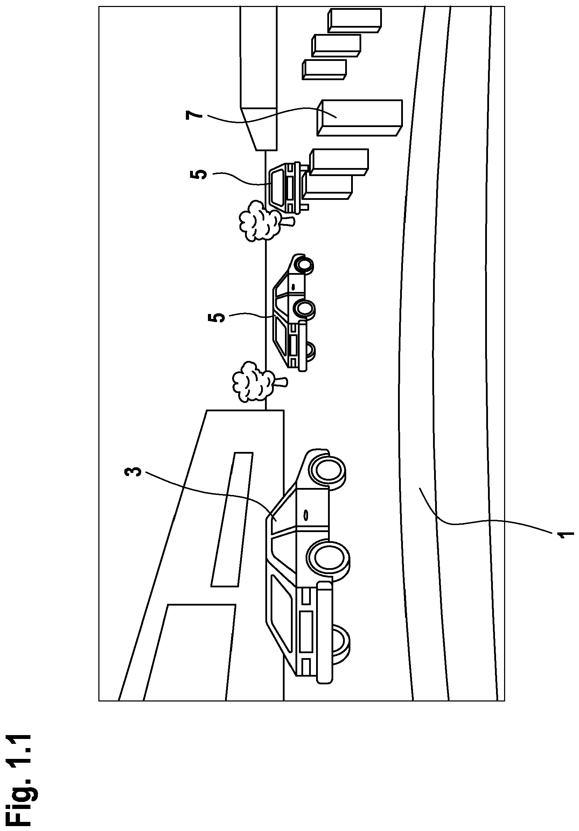

In Figur 1.1 ist ein Verkehrsszenario durch eine Windschutzscheibe eines Kraftfahrzeugs dargestellt.

Beim Blick durch die Windschutzscheibe eines Kraftfahrzeugs lässt sich im unteren Bereich zunächst die Motorhaube 1 des Kraftfahrzeugs sehen.

In dem in Figur 1.1 dargestellten Verkehrsszenario befindet sich auf der linken Seite vor dem Kraftfahrzeug ein weiteres Kraftfahrzeug 3. In Fahrtrichtung vor dem Kraftfahrzeug sind parkende Kraftfahrzeuge 5 zu erkennen. Zusätzlich befinden sich noch weitere Hindernisse 7 vor dem Kraftfahrzeug, wobei die Hindernisse 7 auf der rechten Seite vor dem Kraftfahrzeug zu sehen sind.

Um den Fahrer des Kraftfahrzeuges bei einem Fahrmanöver zu unterstützen, wird zunächst die Umgebung des Kraftfahrzeuges erfasst. Zur Erfassung der Umgebung des Kraftfahrzeuges werden üblicherweise Abstandssensoren, zum Beispiel Ultraschallsensoren, Radarsensoren, Lidarsensoren, Infrarotsensoren oder weitere optische Sensoren, beispielsweise Kameras, eingesetzt. Mit den entsprechenden Sensoren wird das Umfeld des Kraftfahrzeuges, insbesondere der Abstand zu Objekten in der Umgebung des Kraftfahrzeuges erfasst.

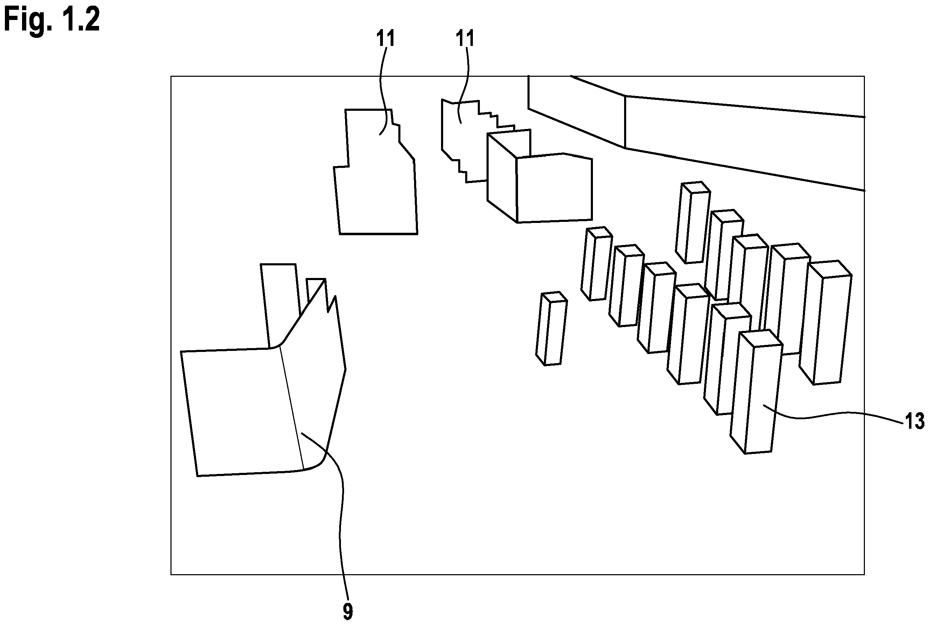

Die mit dem Umfelderfassungssystem erfassten Daten können auf einem Bildschirm, beispielsweise einem Monitor eines Fahrassistenzsystems des Kraftfahrzeugs, beispielsweise des Navigationssystems, oder einer separaten Anzeigeeinheit dargestellt werden. Dies ist beispielhaft für das in Figur 1.1 dargestellte Verkehrsszenario in Figur 1.2 gezeigt. In der dreidimensionalen Darstellung lässt sich nicht erkennen, um was für Objekte es sich jeweils handelt, es wird nur die Kontur der erfassten Objekte gezeigt. So ist zum Beispiel auf der linken Seite mit Bezugszeichen 9 bezeichnet die vom Umfelderfassungssystem erfasste Kontur des Kraftfahrzeugs 3 zu erkennen. Weiterhin sind mit dem Umfelderfassungssystem die parkenden Kraftfahrzeuge 5 vor dem Kraftfahrzeug erfasst worden, die hier als Kontur 11 zu sehen sind.

Weiterhin lassen sich der in Figur 1.2 gezeigten dreidimensionalen Darstellung des in Figur 1.1 gezeigten Verkehrsszenarios auch die Konturen 13 der Hindernisse 7 entnehmen.

Anhand der den Fahrschlauch des Kraftfahrzeuges 1 begrenzenden Objekte 3, 5, 7 und die Darstellung der jeweiligen Konturen 9,11,13 kann der Fahrer des Kraftfahrzeuges bereits eine erste Abschätzung zum möglichen Manövrieren des Kraftfahrzeuges treffen.

In der in Figur 1.2 dargestellten dreidimensionalen Darstellung der Umgebung des Kraftfahrzeuges ist jedoch noch kein Hinweis auf den Abstand des Kraftfahrzeugs zu den jeweiligen Objekten in der Umgebung des Kraftfahrzeugs gegeben. Dieser Abstand lässt sich bei einer dreidimensionalen Darstellung, wie sie in Figur 1.2 gezeigt ist, lediglich erahnen.

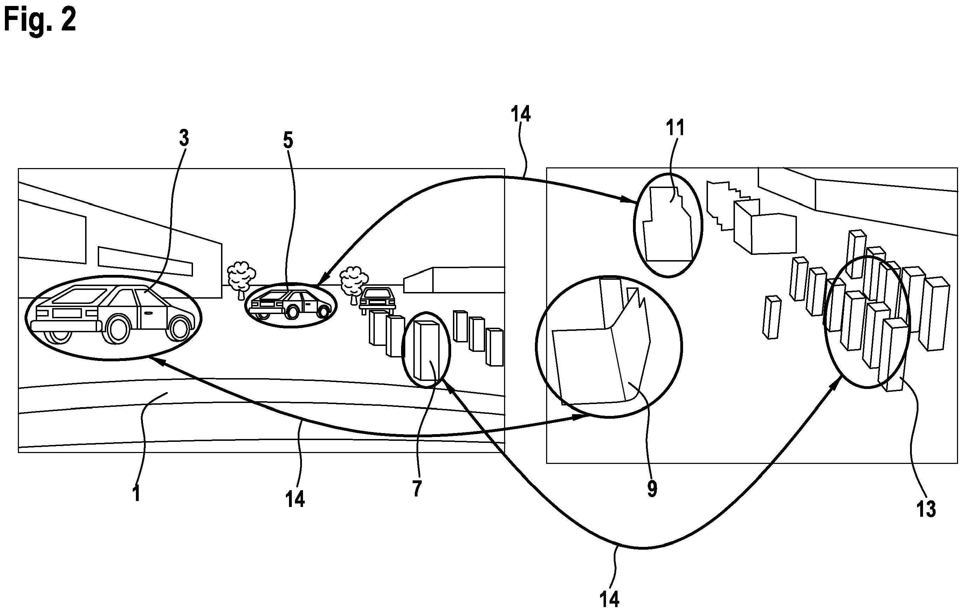

In Figur 2 ist noch einmal verdeutlicht, welche Konturen welchen Objekten des Verkehrsszenarios zugeordnet sind. Die jeweiligen Zuordnungen sind dabei durch Markierung des Objektes und Markierung der Kontur gezeigt, wobei die jeweiligen einander zugeordneten Objekte und Konturen mit einem Doppelpfeil 14 verbunden sind.

Bei derzeit eingesetzten Fahrassistenzsystemen wird dem Fahrer der Abstand zum nächstliegenden Objekt angezeigt. Die Anzeige zum nächstliegenden Objekt erfolgt dabei zum Beispiel akustisch oder optisch, wobei bei einer akustischen Anzeige der Abstand zu dem nächstliegenden Objekt durch Warntöne angezeigt wird, wobei die Frequenz der Warntöne mit abnehmendem Abstand zunimmt. Weiterhin ist es bekannt, zum Beispiel Leuchtbalken oder Ähnliches vorzusehen, wobei mit abnehmendem Abstand die Länge des Leuchtbalkens zunimmt oder sich auch die Farbe ändert und beispielsweise bei Unterschreiten eines vorgegebenen Mindestabstandes ein rotes Signal zu sehen ist, um den Fahrer des Kraftfahrzeugs auf den geringen Abstand hinzuweisen und ein rechtzeitiges Bremsen vor einer Kollision mit dem Objekt zu ermöglichen. Bei einer akustischen Anzeige wird bei Unterschreiten eines vorgegebenen Mindestabstands üblicherweise ein Dauerton gesendet.

Da bei vielen Fahrmanövern, die der Fahrer selbsttätig durchführt und lediglich die Hinweise zum Abstand zu Objekten nutzt insbesondere der Abstand zu bestimmten Objekten vom Fahrer benötigt wird, ist es notwendig, dass der Fahrer des Kraftfahrzeugs eine eindeutige Zuordnung des Abstandssignals zu einem Objekt treffen kann. Dies ist mit den bekannten Systemen nicht immer möglich.

Beim erfindungsgemäßen Verfahren wählt der Fahrer aus der Darstellung der Umgebung, beispielsweise der Konturdarstellung der Objekte in der Umgebung ein Objekt aus, zu dem dann der Abstand angezeigt wird.

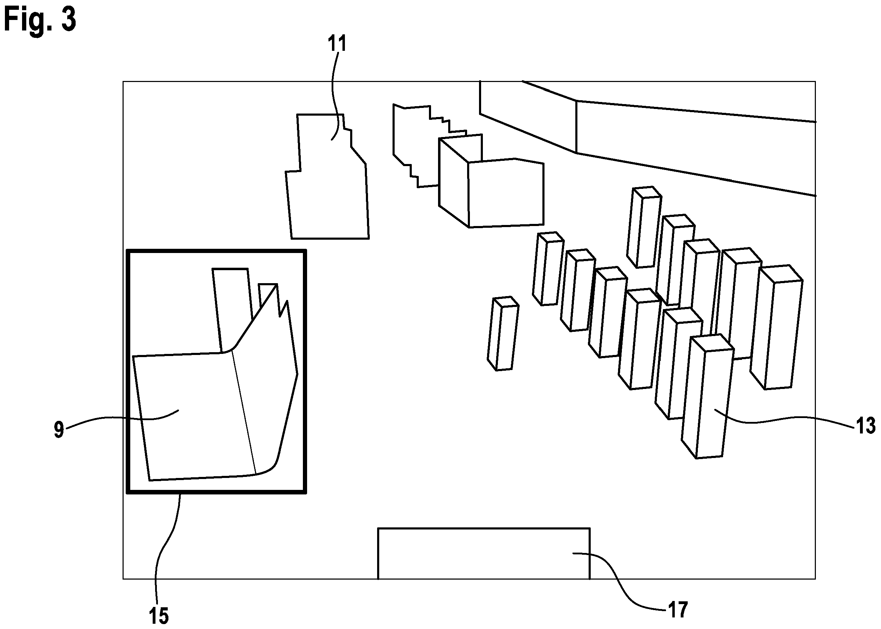

### Die Auswahl eines Objektes ist beispielhaft in Figur 3 dargestellt.

### Die in Figur 3 dargestellten Konturen entsprechen denen der Figuren 1.2 und 2.

Zunächst wird durch den Fahrer des Kraftfahrzeugs ein Objekt ausgewählt, zu dem der Abstand angezeigt werden soll. Die Auswahl des Objektes kann zum Beispiel durch Antippen auf einem Touchscreen erfolgen. Alternativ ist es auch möglich, beispielsweise einen Mauszeiger vorzusehen, der auf die Kontur 9, 11, 13 des auszuwählenden Objektes bewegt wird und anschließend das Objekt durch Betätigung eines Tasters markiert wird. Die Markierung eines ausgewählten Objektes kann beispielsweise in Figur 3 gezeigt durch Umrahmen der ausgewählten Kontur mit einem entsprechenden Rahmen 15 erfolgen. Hierbei ist es zum Beispiel möglich, dass der Rahmen 15 eine von der Farbe der Objektkonturen verschiedene Farbe aufweist.

Um dem Fahrer des Kraftfahrzeugs eine zusätzliche Orientierung zu geben ist es weiterhin möglich, beispielsweise die Motorhaube des eigenen Kraftfahrzeugs anzudeuten. Dies ist in der in Figur 3 dargestellten Darstellung durch ein Rechteck 17 am unteren Bildrand erfolgt. Um dem Fahrer des Kraftfahrzeugs anzuzeigen, dass es sich bei dem Rechteck 17 um eine schematische Darstellung des eigenen Kraftfahrzeugs handelt, kann diese zum Beispiel auch farblich anders dargestellt werden als die Konturen 9,11,13 der erfassten Objekte.

Nach der Auswahl des Objektes durch Markieren der entsprechenden dem Objekt zugehörigen Kontur wird dem Fahrer des Kraftfahrzeuges der Abstand zu dem ausgewählten Objekt angezeigt. Die Anzeige zu dem Objekt kann dabei wie aus dem Stand der Technik bekannt optisch oder akustisch erfolgen, beispielsweise durch die optische Darstellung von sich verlängernden Balken oder auch durch einen in der Frequenz sich ändernden Ton in Abhängigkeit vom Abstand. Zusätzlich ist auch eine haptische Anzeige, beispielsweise durch Vibrationen des Lenkrads oder eines Pedals des Kraftfahrzeugs möglich.

Wenn der Fahrer des Kraftfahrzeugs wünscht, dass der Abstand zu mehr als nur einem Objekt angezeigt wird, so ist es erfindungsgemäß in einer bevorzugten Ausführungsform auch möglich, mehrere Objekte auszuwählen.

Insbesondere bei Fahrmanövern in unübersichtlichen Bereichen kann es notwendig sein, sich den Abstand zu mehr als nur einem Objekt anzeigen zu lassen, da die Sicht des Fahrers des Kraftfahrzeugs eingeschränkt ist. Dieser kann nicht rund um das Kraftfahrzeug das gesamte Umfeld gleichzeitig beobachten. Daher wird sich der Fahrer des Kraftfahrzeugs insbesondere den Abstand zu den Objekten anzeigen lassen, die während des Fahrmanövers nur schlecht zu sehen sind.

Das Markieren der verschiedenen Objekte erfolgt dabei vorzugsweise wie vorstehend beschrieben, indem der Fahrer die jeweiligen Objekte, zu denen der Abstand angezeigt werden soll, durch Berührung auf einem Touchscreen markiert. Alternativ kann, wie bereits beschrieben, beispielsweise durch die Erkennung von Sprachkommandos, die Verwendung einer Gestenerkennung, die Umsetzung mittels eines Multifunktionsschalters oder Multifunktionstasters oder dem Bewegen eines Mauszeigers auf das Objekt und anschließendes Betätigen eines entsprechenden Tasters das Objekt markiert werden.

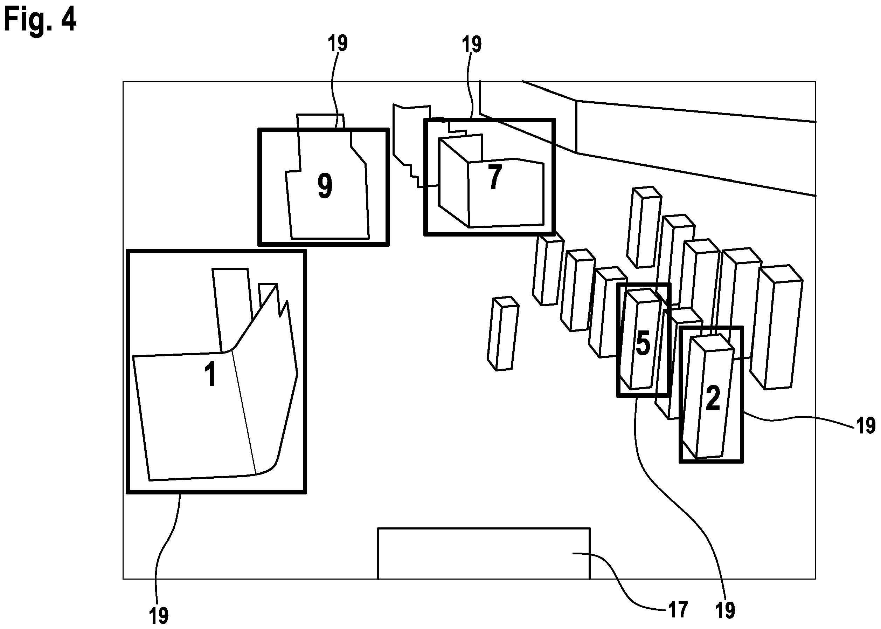

Eine weitere Alternative zur Auswahl eines Objektes ist in Figur 4 dargestellt. Hierzu wird zunächst ein möglicher Fahrschlauch bestimmt, entlang dem das Kraftfahrzeug voraussichtlich bewegt wird. Anschließend werden die Konturen der Objekte, die den prädizierten Fahrschlauch begrenzen und am nächsten zum Fahrschlauch sind, durch Markierungen 19, beispielsweise durch Rechtecke, wie in Figur 4 dargestellt, hervorgehoben. Den einzelnen durch jeweils eine Markierung 19 hervorgehobenen Objektkonturen wird vorzugsweise eine Nummer zugewiesen. Durch Auswahl der Nummer kann der Fahrer des Kraftfahrzeuges dann das Objekt oder die Objekte auswählen, zu dem beziehungsweise zu denen der Abstand angezeigt werden soll.

Neben der Auswahl durch einen Touchscreen oder alternativ durch ein Touchpad oder eine andere Bedieneinrichtung, mit der sich ein Mauszeiger bewegen lässt, können zum Beispiel auch beliebige Taster, Blinker oder andere Bedienelemente genutzt werden, um das Objekt, zu dem der Abstand angezeigt werden soll, auszuwählen und zu markieren.

In einer weiteren bevorzugten Ausführungsform wird vorgesehen, dass der Fahrer auch Konturen aus der Darstellung löschen kann, um so zum Beispiel die Übersichtlichkeit der Darstellung zu erhöhen. So können zum Beispiel die Konturen, die weiter vom Fahrschlauch entfernt sind und somit das Fahrmanöver nicht stören werden, gelöscht werden. Auch hierzu wird durch den Fahrer zunächst das zu löschende Objekt ausgewählt und markiert und anschließend durch Betätigung eines entsprechenden Löschtasters das Objekt gelöscht. Bei einem Touchscreen ist es hierzu zum Beispiel möglich, auf dem Touchscreen bereits die jeweiligen Bedienfelder vorzusehen, durch deren Berührung entsprechende Aktionen, beispielsweise das Löschen eines Objektes, ausgelöst werden. Wenn die Auswahl nicht über einen Touchscreen erfolgt sondern über ein Touchpad oder ein anderes Bedienelement, so ist es zum Beispiel möglich, zusätzliche Schalter vorzusehen oder auch in der Darstellung ein entsprechendes Feld vorzusehen, auf das dann beispielsweise ein Mauszeiger bewegt werden kann, um das entsprechende Feld zu aktivieren.

Weiterhin kann das Verfahren auch für rückwärts gerichtete Fahrhandlungen eingesetzt werden. In bevorzugter Weise wird hierfür die Darstellung des eigenen Fahrzeugs und der Umgebung in Form einer Vogelperspektive abgebildet. Auch bleiben einmal durch den Fahrer selektierte beziehungsweise markierte Umfeldobjekte aktiv, wenn sie nicht mehr im Sichtbereich des Anzeigeelements sind. So kann der Fahrer beispielsweise an einem Objekt, beispielsweise einem Geländer in einer Sackgasse vorbeifahren und erhält, sollte er wieder zurückstoßen und sich dem Objekt geeignet nähern, die bekannte Systemreaktion.

## Patentansprüche

1. Verfahren zur Unterstützung eines Fahrers eines Kraftfahrzeugs bei einem Fahrmanöver, folgende Schritte umfassend:
(e) Erfassen von Daten der Umgebung des Kraftfahrzeugs, Auswerten der erfassten Daten zur Erfassung von Objekten (3, 5, 7) und optische Darstellung der erfassten Objekte (3, 5, 7),
(f) Auswahl mindestens eines der erfassten Objekte (3, 5, 7) durch den Fahrer des Kraftfahrzeugs,
(g) Bestimmung des geringsten Abstandes zwischen dem Kraftfahrzeug und dem mindestens einen ausgewählten Objekt (3, 5, 7),
(h) Ausgabe einer Information an den Fahrer des Kraftfahrzeugs über den geringsten Abstand zwischen dem mindestens einen ausgewählten Objekt (3, 5, 7) und dem Kraftfahrzeug,
**dadurch gekennzeichnet, dass** alle Objekte (3, 5, 7), die einen aufgrund der aktuellen Fahrsituation prädizierten Fahrschlauch flankieren, in der Darstellung hervorgehoben werden und dass ein Warnsignal ausgegeben wird, sobald der geringste Abstand zwischen dem Kraftfahrzeug und dem mindestens einen ausgewählten Objekt (3, 5, 7) einen vorgegebenen Mindestabstand unterschreitet, wobei das Warnsignal ein optisches, akustisches und/oder haptisches Warnsignal ist.

2. Verfahren gemäß Anspruch 1, **dadurch gekennzeichnet, dass** der Fahrer des Kraftfahrzeugs das Objekt (3, 5, 7) in Schritt (b) durch Markieren des Objekts (3, 5, 7) auswählt.

3. Verfahren gemäß Anspruch 1 oder 2, **dadurch gekennzeichnet, dass** der Fahrer das Objekt (3, 5, 7) durch Antippen auf einem Touchscreen markiert.

4. Verfahren gemäß einem der Ansprüche 1 bis 3, **dadurch gekennzeichnet, dass** die erfassten Objekte (3, 5, 7) in einer Draufsicht oder dreidimensional dargestellt werden.

5. Verfahren gemäß einem der Ansprüche 1 bis 4, **dadurch gekennzeichnet, dass** ein ausgewähltes Objekt (3, 5, 7) durch Betätigung eines Bedienelementes aus der Darstellung gelöscht wird.

6. Vorrichtung zur Durchführung des Verfahrens nach einem der Ansprüche 1 bis 5 umfassend Mittel zur Erfassung der Umgebung sowie Mittel zur Auswertung von erfassten Daten zur Erfassung von Objekten und zur Darstellung der erfassten Objekte, Mittel zur Auswahl mindestens eines der dargestellten Objekte und Mittel zur Bestimmung des Abstandes zwischen dem mindestens einen ausgewählten Objekt und dem Kraftfahrzeug.

7. Vorrichtung gemäß Anspruch 6, **dadurch gekennzeichnet, dass** die Mittel zur Erfassung der Umgebung Abstandssensoren umfassen.

8. Vorrichtung gemäß Anspruch 6 oder 7, **dadurch gekennzeichnet, dass** die Mittel zur Auswertung von erfassten Daten, zur Erfassung von Objekten und zur Bestimmung des Abstandes zwischen dem mindestens einen ausgewählten Objekt und dem Kraftfahrzeug ein Steuergerät mit einem Prozessor umfassen.

9. Vorrichtung gemäß einem der Ansprüche 5 bis 8, **dadurch gekennzeichnet, dass** die Mittel zur Darstellung der erfassten Objekte einen Monitor oder ein Head-up-Display umfassen.

10. Vorrichtung gemäß einem der Ansprüche 6 bis 9, **dadurch gekennzeichnet, dass** die Mittel zur Auswahl mindestens eines der dargestellten Objekte einen Touchscreen, ein Touchpad, einen Trackball, einen Multifunktionsschalter, die Erkennung von Sprachkommandos, eine natürlichsprachliche Sprachsteuerung oder eine Gestenerkennung umfassen.

## Claims

1. Method for assisting a driver of a motor vehicle in a driving manoeuvre, comprising the following steps:
(e) capture of data from the surroundings of the motor vehicle, evaluation of the captured data to detect objects (3, 5, 7) and visual representation of the detected objects (3, 5, 7),
(f) selection of at least one of the detected objects (3, 5, 7) by the driver of the motor vehicle,
(g) determination of the shortest distance between the motor vehicle and the at least one selected object (3, 5, 7),
(h) output of a piece of information to the driver of the motor vehicle about the shortest distance between the at least one selected object (3, 5, 7) and the motor vehicle,
**characterized in that** all objects (3, 5, 7) that flank a driving path predicted on the basis of the current driving situation are highlighted in the representation and **in that** a warning signal is output as soon as the shortest distance between the motor vehicle and the at least one selected object (3, 5, 7) drops below a prescribed minimum distance, the warning signal being a visual, audible and/or haptic warning signal.

2. Method according to Claim 1, **characterized in that** the driver of the motor vehicle selects the object (3, 5, 7) in step (b) by marking the object (3, 5, 7).

3. Method according to Claim 1 or 2, **characterized in that** the driver marks the object (3, 5, 7) by tapping on a touchscreen.

4. Method according to one of Claims 1 to 3, **characterized in that** the detected objects (3, 5, 7) are represented in a plan view or three-dimensionally.

5. Method according to one of Claims 1 to 4, **characterized in that** a selected object (3, 5, 7) is removed from the representation by operating an operator control element.

6. Apparatus for performing the method according to one of Claims 1 to 5, comprising means for detecting the surroundings and means for evaluating captured data for evaluating objects and for representing the detected objects, means for selecting at least one of the represented objects and means for determining the distance between the at least one selected object and the motor vehicle.

7. Apparatus according to Claim 6, **characterized in that** the means for detecting the surroundings comprise distance sensors.

8. Apparatus according to Claim 6 or 7, **characterized in that** the means for evaluating captured data, for detecting objects and for determining the distance between the at least one selected object and the motor vehicle comprise a controller having a processor.

9. Apparatus according to one of Claims 5 to 8, **characterized in that** the means for representing the detected objects comprise a monitor or a head-up display.

10. Apparatus according to one of Claims 6 to 9, **characterized in that** the means for selecting at least one of the represented objects comprise a touchscreen, a touchpad, a trackball, a multifunction switch, the recognition of voice commands, natural-language voice control or gesture recognition.

## Revendications

1. Procédé d'assistance d'un conducteur d'un véhicule automobile lors d'une manoeuvre de conduite, comprenant les étapes suivantes :
(e) collecte de données de l'environnement du véhicule automobile, interprétation des données collectées en vue de détecter des objets (3, 5, 7) et représentation visuelle des objets (3, 5, 7) détectés,
(f) sélection d'au moins l'un des objets (3, 5, 7) détectés par le conducteur du véhicule automobile,
(g) détermination de plus petit écart entre le véhicule automobile et l'au moins un objet (3, 5, 7) sélectionné,
(h) délivrance d'une information au conducteur du véhicule automobile à propos du plus petit écart entre l'au moins un objet (3, 5, 7) sélectionné et le véhicule automobile,
**caractérisé en ce que** tous les objets (3, 5, 7) qui, du fait de la situation de conduite actuelle, accompagnent la trajectoire de circulation prédite, sont mis en valeur dans la représentation, et **en ce qu'**un signal d'alerte est délivré dès que le plus petit écart entre le véhicule automobile et l'au moins un objet (3, 5, 7) sélectionné devient inférieur à un écart minimum prédéfini, le signal d'alerte étant un signal d'alerte visuel, sonore et/ou haptique.

2. Procédé selon la revendication 1, **caractérisé en ce que** le conducteur du véhicule automobile sélectionne l'objet (3, 5, 7) à l'étape (b) par un marquage de l'objet (3, 5, 7).

3. Procédé selon la revendication 1 ou 2, **caractérisé en ce que** le conducteur marque l'objet (3, 5, 7) en effleurant un écran tactile.

4. Procédé selon l'une des revendications 1 à 3, **caractérisé en ce que** les objets (3, 5, 7) détectés sont représentés dans une vue de dessus ou en trois dimensions.

5. Procédé selon l'une des revendications 1 à 4, **caractérisé en ce qu'**un objet (3, 5, 7) sélectionné est effacé de la représentation en actionnant un élément de commande.

6. Dispositif destiné à mettre en oeuvre le procédé selon l'une des revendications 1 à 5, comprenant des moyens servant à détecter l'environnement ainsi que des moyens servant à interpréter des données collectées en vue de détecter des objets et de représenter les objets détectés, des moyens servant à sélectionner au moins l'un des objets représentés et des moyens servant à déterminer l'écart entre l'au moins un objet sélectionné et le véhicule automobile.

7. Dispositif selon la revendication 6, **caractérisé en ce que** les moyens servant à collecter l'environnement comprennent des capteurs de distance.

8. Dispositif selon la revendication 6 ou 7, **caractérisé en ce que** les moyens servant à interpréter les données collectées, à détecter des objets et à déterminer l'écart entre l'au moins un objet sélectionné et le véhicule automobile comprennent un contrôleur doté d'un processeur.

9. Dispositif selon l'une des revendications 5 à 8, **caractérisé en ce que** les moyens servant à représenter les objets détectés comprennent un moniteur ou un afficheur tête haute.

10. Dispositif selon l'une des revendications 6 à 9, **caractérisé en ce que** les moyens servant à sélectionner au moins l'un des objets représentés comprennent un écran tactile, un pavé tactile, une trackball, un commutateur multifonction, la reconnaissance d'une commande vocale, une commande vocale en langage naturel ou une reconnaissance gestuelle.
